# EUROPÄISCHE PATENTANMELDUNG

(11) **EP 3 798 090 A1**
(43) Veröffentlichungstag der Anmeldung: **31.03.2021**
(21) Anmeldenummer: 19200176.6
(22) Anmeldetag: 27.09.2019
(51) Int. Cl.: B61L 15/00, B61L 27/00

(54) **VERFAHREN ZUM ÜBERWACHEN EINER GESPROCHENEN KOMMUNIKATION IM ZUGVERKEHR UND ZUGEHÖRIGES ZUGLEITSYSTEM**

(71) Anmelder: Siemens Mobility GmbH, 81739 München (DE)
(72) Erfinder: Griebel, Stephan, 38302 Wolfenbüttel (DE)

(57) **Zusammenfassung**

Die Erfindung offenbart ein Verfahren zum Überwachen einer gesprochenen Kommunikation im Zugverkehr, wobei von der gesprochenen Kommunikation eine Aufzeichnung erstellt wird, mit der Aufzeichnung rechnergestützt eine Spracherkennung durchgeführt wird, mit der Spracherkennung identifizierte Terme rechnergestützt mit gespeicherten Mustern (PTN) für Terme verglichen werden und im Fall von unzulässigen Abweichungen zwischen den identifizierten Termen und den Mustern (PTN) eine Fehlermeldung ausgegeben wird. Ferner werden ein Verfahren zum Erstellen von Mustern (PTN) für eine rechnergestützte Spracherkennung sowie ein Zugleitsystem für eine gesprochene Kommunikation bereitgestellt.

## Beschreibung

Die Erfindung betrifft ein Verfahren zum Überwachen einer gesprochenen Kommunikation im Zugverkehr. Weiter betrifft die Erfindung Verfahren zum Erstellen von Mustern für eine rechnergestützte Spracherkennung. Außerdem betrifft die Erfindung ein Zugleitsystem, für eine gesprochen Kommunikation. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Es ist allgemein bekannt, dass es Streckenabschnitte im Schienennetz gibt, die trotz fortschreitender Automatisierung des Zugverkehrs ohne die Absicherung eines automatischen Zugsicherungssystems betrieben werden. Zur Sicherung dieser Streckenabschnitte wird eine Mensch-zu-Mensch Kommunikation verwendet. Der Zugbegleiter ist mit einer Leitstelle in Kommunikation, wobei zur Vermeidung von Missverständnissen eine definierte Sprache benutzt werden muss. Die Vorgaben für die fernmündliche Kommunikation ist seitens der Deutschen Bahn beispielsweise in der RiL 436 geregelt.

Dort ist geregelt, wie mit Hilfe von fernmündlichen Fahranfragen, Fahrerlaubnissen und Ankunftsmeldungen der Betrieb ablaufen soll. Der Inhalt und Ablauf der zu verwendenden Kommunikation ist detailliert festgelegt und muss eingehalten und gerichtsfest protokolliert werden. Der reine Zugleitbetrieb nach RiL 436 wird folglich generell ohne technische Sicherung durchgeführt, d. h., für die Sicherheit der Zugfahrten ist allein das Zusammenspiel des Betriebspersonals und die genaue Befolgung von Meldungen und Erlaubnissen verantwortlich.

Einige Auszüge aus den Regelungen der RiL 436 sind im Folgenden wiedergegeben:
"Eisenbahnstrecken mit Zugleitbetrieb werden Zugleitstrecken genannt, die Betriebsstellen der Zugleitstrecke - Bahnhöfe, Haltestellen und Haltepunkte - heißen Zuglaufstellen. Die Regelung des Zugverkehrs obliegt dem Zugleiter, der oft zugleich Fahrdienstleiter eines an die Zugleitstrecke angrenzenden Bahnhofs einer Hauptbahn ist.... Jeder Zug benötigt zur Fahrt auf einer Zugleitstrecke eine Fahrerlaubnis des Zugleiters, die mit der Fahranfrage eingeholt wird.... Der Wortlaut der Fahranfrage in der RiL 436 lautet: Darf Zug (Nummer) bis (Name der Zuglaufstelle/Zugmeldestelle) fahren? Sind alle Bedingungen erfüllt, erteilt der Zugleiter die Fahrerlaubnis mit den Worten: Zug (Nummer) darf bis (Name der Zuglaufstelle/Zugmeldestelle) fahren. (ggf. Zusatz: Dort Kreuzung mit Zug (Nummer).) Beziehungsweise, falls nicht alle Bedingungen erfüllt sind: Nein, warten. Nach der Ankunft in der Zuglaufstelle, bis zu der die Fahrerlaubnis erteilt wurde, muss der Zugleiter über die Ankunft des Zuges mit der Ankunftmeldung unterrichtet werden: Zug (Nummer) in (Name der Zuglaufstelle/Zugmeldestelle) . Erst nach Eingang der Ankunftmeldung darf der Zugleiter einem nachfolgenden Zug die Fahrerlaubnis bis zu einer rückgelegenen Zuglaufstelle erteilen. So ist gewährleistet, dass zwischen zwei einander nachfolgenden Zügen mindestens ein Streckenabschnitt frei bleibt. Fahrerlaubnis und Ankunftsmeldung sind zwei Arten von Zuglaufmeldungen, des Weiteren gibt es noch die Abstellmeldung, Fahrwegsicherungsmeldung und Verlassensmeldung.

Die Aufgabe der Erfindung besteht darin, ein Verfahren zum Leiten von Zügen und ein dieses Verfahren anwendendes Zugleitsystem anzugeben, mit dem trotz einer manuellen Zugleitung über Kommunikation der beteiligten Personen ein größeres Maß an Sicherheit während des Zugbetriebes erreicht werden kann. Außerdem ist es Aufgabe der Erfindung ein Computerprogramm bzw. eine Bereitstellung für ein solches Computerprogramm anzugeben, wobei das Computerprogramm in der Lage ist, das Verfahren durchzuführen.

Diese Aufgabe wird mit dem eingangs angegebenen Anspruchsgegenstand (Verfahren zum Überwachen) erfindungsgemäß dadurch gelöst, dass
- von der gesprochenen Kommunikation eine Aufzeichnung erstellt wird,
- mit der Aufzeichnung rechnergestützt eine Spracherkennung durchgeführt wird,
- mit der Spracherkennung identifizierte Terme rechnergestützt mit gespeicherten Mustern für Terme verglichen werden,
- im Fall von unzulässigen Abweichungen zwischen den identifizierten Termen und den Mustern eine Fehlermeldung ausgegeben wird.

Die Aufzeichnung der Kommunikation bildet die Grundlage für die nachfolgende Spracherkennung. Die Aufzeichnung selbst kann analog oder vorzugsweise digital erfolgen. Die Spracherkennung liefert ein digitales Modell einzelner sprachlicher Elemente, wobei es sich vorliegend um Terme handelt, welche gemäß den Richtlinien der zu Kommunikation, also beispielsweise RiL 436, verwendet werden. Terme können aus einzelnen Wörtern oder Wortgruppen bestehen, wobei diese Wortgruppen festgelegte Phrasen der Zugkommunikation bilden.

Als unzulässige Abweichungen im Sinne der Erfindung sind Abweichungen der Terme von den abgespeicherten Mustern zu verstehen. Diese Abweichungen sind gleichbedeutend mit der Tatsache, dass die Spracherkennung eine gesprochene Kommunikation im Rahmen der Überprüfung nicht als einen zulässigen Term erkennt. Dabei besteht naturgegebenermaßen ein gewisses Toleranzintervall, innerhalb dessen die Spracherkennung die Befehle auch erkennt, wenn der Sprecher beispielsweise aufgrund eines Dialektes gewisse Abweichungen von dem jeweils abgespeicherten Muster produziert. Dadurch, dass die zu verwendenden Terme in der zu Kommunikation genauen Regeln folgen, ist sichergestellt, dass die Spracherkennung wegen des geringen zur Verfügung stehenden "Wortschatzes" ein hohes Maß an Erkennungssicherheit gewährleistet.

Die grundlegende Idee dieser Erfindung ist es, bestehende Verfahren zur Spracherkennung, z.B. basierend auf den sogenannten "Hidden Markov Modellen", die zur Durchführung einer Sprachanerkennung allgemein bekannt sind, zu nutzen, um die gesprochene Kommunikation im Rahmen des Zugleitbetriebs nach RiL 436 zu digitalisieren und bei Abweichungen vom vorgegebenen Verfahren den beteiligten Personen Warnrückmeldung zu geben.

Die Theorie der Spracherkennung auf Basis von Hidden Markov Modellen ist rund 20 Jahre alt, hat aber auf Grund der rasanten Erhöhung der Rechnerkapazitäten nun weite Verbreitung in der Praxis gefunden. Grundsätzlich kann auch jeder andere Algorithmus zur Spracherkennung verwendet werden.

Bei der beschriebenen Vorgehensweise ergeben sich folgende Vorteile. Durch die erfindungsgemäße Kommunikationsüberwachung mittels Spracherkennung und automatischem Abgleich mit der "zugelassenen" Kommunikation (vorgegeben beispielsweise gemäß RiL 436) kann die Sicherheit im bisher nicht automatisch gesicherten Zugleitbetrieb erheblich gesteigert werden.

Das erfindungsgemäße Verfahren kann als neues mögliches Produkt im Rahmen einer Digitalisierungsstrategie implementiert werden, z.B. im Zusammenspiel zw. mobilen Endgeräten und lokalen Rechnern/Datenbanken. Der Betreiber hat auf Grund gesteigertes Interesse an dieser digitalen Lösung, wenn es bei der Projektierung zunächst nur zu einer Teildigitalisierung des Streckennetzes kommt. Auf diesem Wege können Streckenabschnitte, welche unter Anwendung gesprochener Kommunikation gesichert werden, in die digitale Umgebung eines teilweise digitalisierten Streckennetzes einbezogen werden.

Sofern es in der nachfolgenden Beschreibung nicht anders angegeben ist, beziehen sich die Begriffe "erstellen", "berechnen", "rechnen", "feststellen", "generieren", "konfigurieren", "modifizieren" und dergleichen, vorzugsweise auf Handlungen und/oder Prozesse und/oder Verarbeitungsschritte, die Daten verändern und/oder erzeugen und/oder die Daten in andere Daten überführen. Dabei liegen die Daten insbesondere als physikalische Größen vor, beispielsweise als elektrische Impulse oder auch als Messwerte. Die erforderlichen Anweisungen/Programmbefehle sind ein einem Computerprogramm als Software zusammengefasst. Weiterhin beziehen sich die Begriffe "empfangen" "aussenden", "einlesen", "auslesen", "übertragen" und dergleichen auf das Zusammenwirken einzelner Hardwarekomponenten und/oder Softwarekomponenten über Schnittstellen. Die Schnittstellen können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Unter "rechnergestützt" oder "computerimplementiert" kann im Zusammenhang mit der Erfindung beispielsweise eine Implementierung des Verfahrens verstanden werden, bei dem ein Computer oder mehrere Computer mindestens einen Verfahrensschritt des Verfahrens ausführt oder ausführen. Der Ausdruck "Computer" ist breit auszulegen, er deckt alle elektronischen Geräte mit Datenverarbeitungseigenschaften ab. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können. Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers wie einer Festplatte oder eines Datenträgers verstanden werden.

Unter einem "Prozessor" kann im Zusammenhang mit der Erfindung beispielsweise eine Maschine wie einem Sensor zur Erzeugung von Messwerten oder eine elektronische Schaltung verstanden werden. Bei einem Prozessor kann es sich insbesondere um einen Hauptprozessor (engl. Central Processing Unit, CPU), einen Mikroprozessor oder einen Mikrocontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) handeln. Auch kann unter einem Prozessor ein virtualisierter Prozessor oder eine Soft-CPU verstanden werden. Es kann sich beispielsweise auch um einen programmierbaren Prozessor handeln, der mit einer Konfiguration zur Ausführung eines rechnergestützten Verfahrens ausgerüstet ist.

Gemäß einer Ausgestaltung der Erfindung ist vorgesehen, dass die Fehlermeldung akustisch oder optisch erfolgt, insbesondere auf ein mobiles Endgerät eines Fahrzeugs und/oder eine Bedieneinrichtung einer Leitzentrale.

Eine akustische Fehlermeldung ist von besonderem Vorteil, weil die Zugleitung ebenfalls akustisch über gesprochene Kommunikation erfolgt und der Zugführer sowie der Mitarbeiter in der Leitstelle auf eine akustische Signalübermittlung (Sprache) eingestellt sind. Ein akustisches Signal wird daher gut wahrgenommen, auch wenn das Personal sich während der Fehlermeldung nicht auf optische Ausgabeeinrichtungen konzentriert.

Eine optische Fehlerausgabe kann über optische Ausgabeeinrichtungen wie Bildschirme erfolgen. Dies hat den Vorteil, dass diese Infrastruktur ohnehin vorgesehen ist und das Personal an der Auswertung der über diese Ausgabeeinrichtungen abgegebenen vorbereitet ist. Eine andere optische Ausgabeeinrichtung kann beispielsweise eine Warnleuchte sein, die nur zu diesem Zweck aktiviert wird. Dies hat den Vorteil, dass das Signal eindeutig ist (wenn das Personal entsprechend geschult ist) und auch ausgegeben werden kann, wenn ein Bildschirm als Ausgabeeinrichtung zur Bewältigung anderer Aufgaben der Informationsübermittlung dienen muss.

Gemäß einer Ausgestaltung der Erfindung ist vorgesehen, dass beim Vergleichen der Terme eine Position des Fahrzeugs beim Erstellen der Aufzeichnung berücksichtigt wird.

Die Position des Fahrzeugs kann beispielsweise mit GPS bestimmt werden. Die Kenntnis der Position ist hilfreich zu Dokumentationszwecken. Es ist zum Beispiel hilfreich, die augenblickliche Position des Fahrzeugs mit der Aufnahme der Kommunikation zu korrelieren, so dass es auch möglich ist, festzustellen, wo welche der Zugleitung benutzt wurden.

Gemäß einer Ausgestaltung der Erfindung ist vorgesehen, dass die Position mit Streckendaten und/oder ortsabhängigen Wetterdaten abgeglichen wird. Gemäß einer weiteren Ausgestaltung der Erfindung ist vorgesehen, dass bei dem Abgleichen der Position Terme berücksichtigt werden, die mit den Streckendaten und/oder mit den Wetterdaten korreliert sind.

Ein Abgleich der Position mit Streckendaten, die beispielsweise aus einem Streckenatlas kommen, oder Wetterdaten, die beispielsweise von einem Wetterdienst zur Verfügung gestellt werden können, macht es möglich, diese mit der gesprochen Kommunikation im Rahmen Zugleitung zu korrelieren. Der Vorteil dabei ist, dass der Kontext der Strecke und der Umgebungsbedingungen (beispielsweise Wetter) mit in die Beurteilung einfließen können, ob ein adäquater Term während des Prozesses der Zugleitung verwendet wurde. Mit anderen Worten kann nur geprüft werden, ob Terme verwendet wurden, gemäß den Standards der Kommunikation zulässig sind, sondern ob diese Terme auch sinnvoll verwendet wurden. Ist zum Beispiel bekannt, in welcher Reihenfolge die Bahnhöfe eines Streckenabschnittes angelaufen werden, kann überprüft werden, ob sich bei der Zugkommunikation seitens der Beteiligten ein Irrtum vorliegt, welcher Bahnhof gerade angefahren wird. Eine andere Möglichkeit besteht darin, wetterbedingt zulässige Höchstgeschwindigkeiten herabzusetzen, sodass die Fahrerlaubnis einer bestimmten Geschwindigkeit situationsbedingt als fehlerhafte Einschätzung der Lage interpretiert und als Fehler ausgegeben wird.

Gemäß einer Ausgestaltung der Erfindung ist vorgesehen, dass als Abweichung auch ein Ausbleiben eines mit den Streckendaten und/oder mit den Wetterdaten korrelierten Terms interpretiert wird.

Hierdurch ist es vorteilhaft auch möglich, dass aus dem Kontext des gerade befahrenen Streckenabschnittes ein bestimmter Term zu erwarten ist, wobei ein Ausbleiben dieses Terms, also die Tatsache dass dieser nicht erkennt erkannt wird, dahingehend interpretiert wird, dass eine fehlerhafte Einschätzung des an der Zugkommunikation beteiligten Personals vorliegt. Diese Tatsache wird erfindungsgemäß als Fehler ausgegeben, sodass das Personal darauf aufmerksam gemacht wird und den Fehler rechtzeitig beheben kann, bevor dieser eine negative Konsequenz nach sich zieht.

Gemäß einer Ausgestaltung der Erfindung ist vorgesehen, dass die Aufzeichnung nach dem Durchführen der Spracherkennung gespeichert wird.

Gemäß einer Ausgestaltung der Erfindung ist vorgesehen, dass zum Speichern der Aufzeichnung die Blockchain-Technologie genutzt wird.

Durch die Speicherung der gesamten Kommunikation nach dem Blockchainverfahren ergeben sich juristisch klar definierte Nachweismöglichkeiten. Dies wird dadurch sichergestellt, dass sich mittels der Blockchain-Technologie abgespeicherte Inhalte nicht unautorisiert verändern lassen. Die Blockchain-Technologie gewährleistet somit die erforderliche Fälschungssicherheit von Daten und genügt somit den hohen Sicherheitsanforderungen der Bahntechnik. Diese können beispielsweise verwendet werden, um bei Störungen des Betriebs nach den Ursachen zu suchen.

Das Speichern in Blockchain-Technologie lässt sich vorteilhaft besonders einfach umsetzen, wenn für eine dezentrale Speicherung der Kommunikation ein Clouddienst zum Einsatz kommt. Die Cloud-Technologie ermöglicht es vorteilhaft, ohne Vorhalten von gesonderten Speicherkapazitäten für die Speicherung der Kommunikation die der Cloud zugehörigen Speicherressourcen zu verwenden.

Als "Cloud" soll eine Umgebung für ein "Cloud-Computing" (deutsch Rechnerwolke oder Datenwolke) verstanden werden. Gemeint ist eine IT-Infrastruktur welche über ein Netzwerk wie das Internet verfügbar gemacht wird. Sie beinhaltet in der Regel Speicherplatz, Rechenleistung oder Anwendungssoftware als Dienstleistung, ohne dass diese auf dem die Cloud nutzenden lokalen Rechner installiert sein müssen. Angebot und Nutzung dieser Dienstleistungen erfolgen dabei ausschließlich durch technische Schnittstellen und Protokolle, etwa mittels eines Webbrowsers. Die Spannweite der im Rahmen des Cloud-Computings angebotenen Dienstleistungen umfasst das gesamte Spektrum der Informationstechnik und beinhaltet unter anderem Infrastruktur, Plattformen und Software.

Die genannte Aufgabe wird alternativ mit dem eingangs angegebenen Anspruchsgegenstand (Verfahren zur Mustererstellung) erfindungsgemäß auch dadurch gelöst, dass
- Terme identifiziert werden, die für eine gesprochene Kommunikation im Zugverkehr erforderlich sind,
- mit den Termen rechnergestützt ein Spracherkennungsprogramm trainiert wird, wobei die Terme als Muster für die Durchführung einer rechnergestützten Spracherkennung gespeichert werden.

Die Erstellung von Mustern ist erforderlich, da die Spracherkennung die Aufzeichnung der gesprochenen Sprache mit den gemäß dem Standard für die Zugkommunikation zu verwenden Begriffen vergleichen muss. Das genannte Verfahren stellt somit erfindungsgemäß die erste Phase zur Vorbereitung der Anwendung der Spracherkennung dar, bei der das Programm für die Spracherkennung trainiert werden muss. Vorteilhaft ist es damit möglich, ein Spracherkennungsprogramm der zu trainieren, dass es für eine zu Kommunikation verwendet werden kann. Die damit verbundenen weiteren Vorteile sind obenstehend bereits erläutert worden und sollen an dieser Stelle noch einmal wiederholt werden.

Gemäß einer Ausgestaltung der Erfindung ist vorgesehen, dass ein maschinelles Lernen angewendet wird.

Die Durchführung eines maschinellen Lernens hat den Vorteil, dass der Prozess einer Erstellung von Mustern für die Spracherkennung automatisiert erfolgen kann. Insbesondere ist es vorteilhaft auch möglich, während des Anwendens der Spracherkennung Fehler, die aufgrund ungenauer oder falscher Muster wiederholt auftreten, durch ein nachträgliches Training der Spracherkennung zu verbessern. Das maschinelle Lernen ermöglicht somit einen fortlaufenden Optimierungsprozess für die Anwendung des erfindungsgemäßen Verfahrens zum überwachen. Zur Durchführung eines maschinellen Lernens muss die rechnergestützte Infrastruktur, die das maschinelle Lernen durchführen soll, mit einer künstlichen Intelligenz ausgestattet sein.

Unter künstlicher Intelligenz (im Folgenden auch mit KI abgekürzt) ist im Rahmen dieser Erfindung im engeren Sinne das rechnergestützte Machine Learning (im Folgenden auch mit ML abgekürzt) zu verstehen. Es geht dabei um das statistische Lernen der Parametrisierung von Algorithmen, vorzugsweise für sehr komplexe Anwendungsfälle. Mittels ML erkennt das System anhand von zuvor eingegebenen Lerndaten Muster und Gesetzmäßigkeiten bei den erfassten Prozessdaten. Mithilfe geeigneter Algorithmen können durch ML eigenständig Lösungen zu aufkommenden Problemstellungen gefunden werden. ML gliedert sich in drei Felder - überwachtes Lernen, unüberwachtes Lernen und bestärkendes Lernen (Reinforcement Learning), mit den spezifischeren (Teil-)Anwendungen Regression und Klassifikation, Strukturerkennung und -vorhersage, Datengenerierung (Sampling) sowie autonomes Handeln.

Beim überwachten Lernen wird das System durch den Zusammenhang von Eingabe und zugehöriger Ausgabe bekannter Daten trainiert. Dabei kommt es auf die Verfügbarkeit richtiger Daten an, denn wenn das System mit schlechten Beispielen trainiert wird, so lernt es fehlerhafte Zusammenhänge. Beim unüberwachten Lernen wird das System ebenfalls mit Beispieldaten trainiert, jedoch nur mit Eingabedaten und ohne Zusammenhang zu einer bekannten Ausgabe. Es lernt, wie Datengruppen zu bilden und zu erweitern sind, was typisch ist und wo Abweichungen auftreten. Dadurch lassen sich Anwendungsfälle beschreiben und Fehlerzustände entdecken. Beim bestärkenden Lernen lernt das System durch Versuch und Irrtum, indem es zu gegebenen Problemstellungen Lösungen vorschlägt und über eine Feedbackfunktion eine positive oder negative Bewertung zu diesem Vorschlag erhält. Je nach Belohnungsmechanismus erlernt das KI-System, entsprechende Funktionen auszuführen.

Gemäß einer Ausgestaltung der Erfindung ist vorgesehen, dass als Terme
- vorgegebene Sprachbefehlen, insbesondere aus der RiL 436, und/oder
- Bezeichnungen der Züge und Haltestellen
   trainiert werden.

Durch ein Trainieren sowohl der der Kommunikation verwendeten Begriffe als auch von Eigennamen (beispielsweise der Namen der zu befahrenen Stationen) wird vorteilhaft erreicht, dass auch Phrasen als Ganzes erkannt werden können, in denen an sich nicht im Standard festgelegte Eigennamen beispielsweise der Stationsnamen enthalten sind. Hierdurch ist es insbesondere auch vorteilhaft möglich, die fehlerhafte Verwendung von Stationsnamen zu überprüfen, also Stationsnamen, die in dem "Wortschatz" der Spracherkennung nicht vorkommen. Hierdurch kann verhindert werden, dass Missverständnisse entstehen, weil sich ein Beteiligter bei der gesprochenen Kommunikation wegen des Stationsnamens vertan hat.

Gemäß einer Ausgestaltung der Erfindung ist vorgesehen, dass bei dem Trainieren der Terme auch eine Ortsinformation verarbeitet wird, welche die Position des Fahrzeugs während der Nutzung der betreffenden Terme im Schienennetz enthält.

Hierdurch wird die Qualität der Spracherkennung weiter verbessert und es können auch Fehler erkannt werden, die sich beispielsweise aus einer fehlerhaften Reihenfolge der Verwendung der Namen der Station ergeben (auch wenn der Name selbst richtig ausgesprochen wurde).

Die oben genannten Verfahren greifen ineinander. Das Verfahren zur Erstellung kann beispielsweise nicht nur initial angewendet werden, um Muster für das Verfahren zum überwachen zu erstellen, sondern es kann auch angewendet werden, um Muster zu korrigieren, welche zu unberechtigten Fehlermeldungen führten. Insgesamt kann bei der Anwendung der beiden Verfahren zwischen den folgenden die Verfahren prägenden Phasen unterschieden werden.

### Phase A:

In dieser Phase wird die Kommunikation zw. den beteiligten Personen des Zugleitbetriebs stetig aufgenommen und mittels der automatischen Spracherkennung in maschinell verwertbare Texte umgewandelt ("Digitalisierter Dialog").

### Phase B:

Hierbei wird dieser digitalisierte (d.h. durch Spracherkennung erkannte) Dialog aller beteiligten Personen des Zugleitbetriebs beispielsweise mit den in der RiL 436 vorgegebenen Texten und zugelassenen Abläufen verglichen. Diese können z.B. in einer Speichereinheit (Datenbank) hinterlegt worden sein.

### Phase C:

Bei der Detektion von Abweichungen zur zugelassenen Kommunikation erfolgt eine akustische oder optischen Warnmeldung über mobile Applikation oder eine Meldung an andere Einrichtungen wie Bedienzentralen oder Ähnliches. Somit ist das beteiligte Zugpersonal alarmiert und kann Maßnahmen einleiten, um eventuelle betrieblich gefährliche Situationen zu vermeiden.

### Phase D:

Die gesamte digitalisierte Kommunikation aller beteiligten Personen des Zugleitbetriebs wird zusätzlich für spätere Auswertungen in einer Blockchain hinterlegt werden. Diese basiert auf dem Proof-of-Authority Prinzip mittels einer PKI-Infrastruktur.

Die genannte Aufgabe wird alternativ mit dem eingangs angegebenen Anspruchsgegenstand (Zugleitsystem) erfindungsgemäß auch dadurch gelöst, dass dieses aufweist:
- mindestens zwei Kommunikationseinheiten, die dazu eingerichtet sind, untereinander eine Verbindung zur Übertragung einer gesprochenen Kommunikation herzustellen,
- eine Spracherkennungseinheit, die dazu eingerichtet ist, die gesprochene Kommunikation aufzuzeichnen und eine rechnergestützte Spracherkennung zum Identifizieren von Termen durchzuführen,
- eine Analyseeinheit, die dazu eingerichtet ist, rechnergestützt einen Vergleich der Terme mit gespeicherten Mustern für diese Terme durchzuführen,
- eine Ausgabeeinheit für identifizierte Fehler.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Die Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses das erfindungsgemäße Werkstück erzeugt.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Es zeigen:
- FIG. 1: Ein Ausführungsbeispiel des erfindungsgemäßen Zugleitsystems schematisch und
- FIG. 2: ein Ausführungsbeispiel des erfindungsgemäßen Verfahrens zum Erstellen von Mustern und des Verfahrens zum Überwachen der gesprochenen Kommunikation, jeweils als Flussdiagramm.

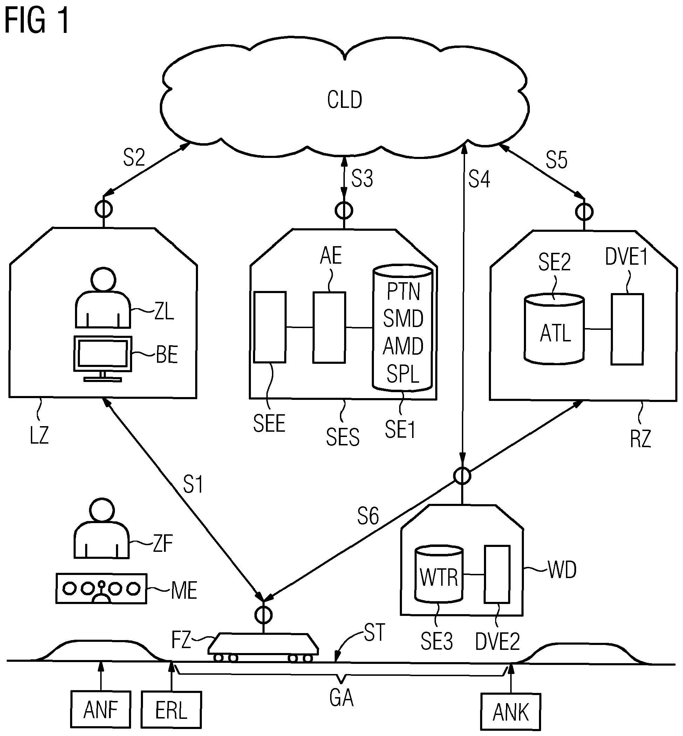

In FIG. 1 ist eine Strecke ST mit einem Fahrzeug FZ in Form eines Zuges dargestellt. Das Fahrzeug FZ befährt gerade einen eingleisigen Gleisabschnitt GA, wobei das Fahrzeug FZ über eine Schnittstelle S1 mit einer Leitzentrale LZ kommunizieren kann.

In der Leitzentrale LZ befindet sich ein Zugleiter ZL, der über eine Bedieneinrichtung BE den Schienenverkehr auf der Strecke ST überwachen kann. Über die Schnittstelle S1 kommuniziert der Zugleiter ZL mit einem Zugführer ZF des Fahrzeugs FZ, dem im Fahrzeug FZ auch ein mobiles Endgerät ME zur Bedienung des Fahrzeugs FZ zur Verfügung steht. Das Fahrzeug FZ wird mittels verbaler Kommunikation geleitet, wobei diese Kommunikation der Richtlinie RiL 436 (Bezugszeihen RIL) folgt. In FIG. 1 sind Punkte der Strecke ST hervorgehoben, die durch die folgenden Ereignisse in der Kommunikation gekennzeichnet sind.
1. Während das Fahrzeug FZ noch im zweigleisigen Abschnitt der Strecke ST ist, stellt der Zugführer ZF bereits eine Fahranfrage ANF an den Zugleiter ZL.
2. Da der Gleisabschnitt GA frei ist, erhält der Zugführer ZF die Fahrerlaubnis ERL durch den Zugleiter ZL.
3. Das Fahrzeug FZ durchquert den Gleisabschnitt GA, wobei der Zugführer ZF nach Verlassen des Gleisabschnitts GA eine Ankunftsmeldung ANK an den Zugleiter ZL sendet. Dabei werden die standardisierten Phrasen durch mündliche Kommunikation über die Schnittstelle S1 ausgetauscht.

Erfindungsgemäß wird die Zugkommunikation über die Schnittstelle S1 durch ein Rechenzentrum RZ überwacht, wobei hierfür eine erste Datenverarbeitungseinheit DVE1 verantwortlich ist. Die Überwachung läuft über eine Cloud CLD. Im Einzelnen werden hierbei folgende Schritte durchlaufen.

Die Kommunikation wird über eine Schnittstelle S1 von der Leitzentrale LZ in die Cloud CLD übertragen. Dort hat ein Spracherkennungsservice SES über eine Schnittstelle S3 Zugriff auf die Daten, wobei der Spracherkennungsservice SES eine Spracherkennungseinheit SEE mit einem Algorithmus aufweist, welcher zur Spracherkennung geeignet ist. Die Daten werden nach Durchführen der Spracherkennung durch die Spracherkennungseinheit SEE einer Analyse mittels einer Analyseeinheit AE unterworfen, um eine Übereinstimmung der erkannten Sprachkomponenten mit den für die Zugkommunikation üblichen Phrasen festzustellen. Dafür werden durch die Analyseeinheit AE Terme in der gesprochenen Sprache aufgefunden, die mit den gemäß dem Standard RIL üblichen Phrasen verglichen werden können. Die Analyseeinheit AE bedient sich bei der Analyse Mustern PTN, die für die verschiedenen Terme abgespeichert sind. Bei der Analyse werden außerdem Sprachmodelle SMD, akustische Modelle AMD sowie Aussprachedaten SPL herangezogen, die in einer ersten Speichereinheit SE1 abgelegt sind.

Außerdem können auch Wetterdaten WTR, die in einer dritten Speichereinheit SE3 gespeichert sind, über eine zweite Datenverarbeitungseinheit DVE2 über eine Schnittstelle S4 in die Cloud CLD übertragen werden. Diese Daten stammen beispielsweise von einem Wetterdienst WD und können für eine Kontextanalyse herangezogen werden. Es gibt nämlich Sprachbefehle bei der Zugkommunikation, die wetterabhängig erteilt werden können, beispielsweise die Reduzierung einer Geschwindigkeit. Bleibt das zugehörige Kommando bei vorliegenden kritischen Wetterdaten aus, kann dies eine Fehlermeldung bewirken. Eine Fehlermeldung kann direkt durch das Rechenzentrum RZ über eine Schnittstelle S6 an das Fahrzeug FZ gegeben werden, damit diese auf dem mobilen Endgerät ME angezeigt werden kann.

In dem Rechenzentrum RZ können außerdem Streckendaten ATL des zu befahrenden Streckennetzes berücksichtigt werden. Diese werden ebenfalls in die erste Datenverarbeitungseinheit DVE1 übertragen und mit den analysierten Sprachdaten korreliert. Zu diesem Zweck ist das Rechenzentrum RZ über eine Schnittstelle S5 mit der Cloud CLD verbunden. Der Abgleich mit den Streckendaten ATL kann beispielsweise genutzt werden, um die Namen der angefahrenen Bahnhöfe, die in dem standardisierten Kommunikationsverfahren verwendet werden, zu überprüfen. Wenn sich Abweichungen ergeben, dass z. B. die Reihenfolge der Namen der Bahnhöfe verwechselt wurde, kann in der besagten Weise über die Schnittstelle S6 eine Fehlermeldung im Fahrzeug FZ ausgelöst werden.

Die Schnittstellen S1 bis S6 sind in FIG. 1 nur beispielhaft angegeben. Die Kommunikation zwischen dem Fahrzeug FZ und der Leitzentrale LZ sowie dem Rechenzentrum RZ erfolgt über eine Funkschnittstelle. Diese könnte auch über die Cloud CLD abgewickelt werden (in FIG. 1 nicht dargestellt) . Andersherum kann statt eines Cloudservices mit der Cloud CLD auch eine direkte Kommunikation der Leitzentrale LZ mit dem Spracherkennungsservice SES sowie mit dem Wetterdienst WD und dem Rechenzentrum RZ erfolgen (nicht dargestellt). Außerdem müssen diese Schnittstellen nicht als Funkschnittstellen ausgeführt sein, sondern können auch über kabelgebundene Schnittstellen realisiert sein (nicht dargestellt).

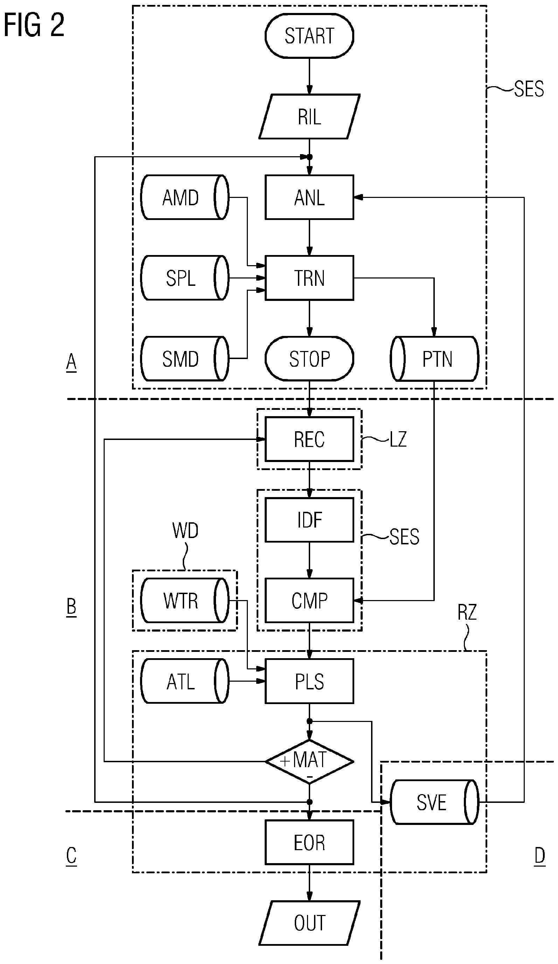

In FIG. 2 ist das Verfahren zur Erstellung von Mustern PTN sowie zur Spracherkennung als Flussbild dargestellt. Hierbei sind die vorstehend schon erwähnten Phasen A bis D zu erkennen. Die einzelnen Phasen A bis D sind durch gestrichelte Linien voneinander abgetrennt.

Außerdem sind in FIG. 2 die Systemgrenzen der Einheiten der Leitzentrale LZ, des Spracherkennungsservices SES, des Wetterdienstes WD sowie des Rechenzentrums RZ durch strichpunktierte Linien angedeutet. Hierdurch wird deutlich, welche Verfahrensschritte bei dem Verfahrensbeispiel gemäß FIG. 2 in welcher dieser Einheiten durchgeführt werden können.

Zunächst ist ein Training des Spracherkennungssystems gemäß Phase A erforderlich. Nach dem Start wird als Input beispielsweise die Richtlinie RIL in das Verfahren eingespeist. Mittels verfügbarer Aufzeichnungen der Zugkommunikation, die beispielsweise aus einer gespeicherten Kommunikation SVE kommen kann, kann ein Analyseschritt ANL vorgenommen werden, um von den verwendeten Phrasen digitalisierte Terme zu erkennen. Mithilfe der akustischen Modelle AMD, von Sprachmodellen SMD und Aussprachedaten SPL kann anschließend ein Training in einem Trainingsschritt TRN erfolgen, damit von den identifizierten Termen Muster PTN erstellt werden können, die für eine spätere Verwendung des Erkennungsverfahrens abgespeichert werden. Dies bedeutet auch einen Stopp des Trainingsverfahrens, welches grundsätzlich nur einmalig erfolgen muss und bei Bedarf, wenn beispielsweise vermehrt Fehler auftreten, noch einmal wiederholt werden kann, um die Qualität der Muster PTN zu verbessern.

Im weiteren Zugleitbetrieb wird die gesprochene Kommunikation zwischen dem Zugleiter ZL und dem Zugführer ZF in einem Aufzeichnungsschritt REC aufgezeichnet. Dies erfolgt in der Leitzentrale LZ. Anschließend wird durch den Spracherkennungsservice SES ein Spracherkennungsschritt IDF durchgeführt, sodass die digitalen Terme, die erkannt wurden, in einem nachfolgenden Vergleichsschritt CMP mit den Mustern PTN verglichen werden können, die zu diesem Zweck aus dem Speicher abgerufen werden. Anschließend kann ein weiterer Plausibilisierungsschritt PLS durchgeführt werden, wobei die erkannten Terme, deren Übereinstimmung mit vergleichbaren Mustern PTN schon festgestellt wurde, mit Wetterdaten WTR, zur Verfügung gestellt durch den Wetterdienst WD, und Streckendaten ATL, die im Rechenzentrum RZ vorliegen, abgeglichen werden können. Dabei können selbst für den Fall, dass die durch die Spracherkennung erkannten Terme entsprechenden Mustern PTN entsprechen, festgestellt werden, ob die erkannten Terme in den Kontext des gerade ablaufenden Zugleitbetriebs passen. Z. B. kann überprüft werden, ob die Namen der Stationen in der richtigen Reihenfolge kommuniziert werden.

In einem nachfolgenden Überprüfungsschritt MAT wird festgestellt, ob die plausibilisierten Daten mit dem Zugleitbetrieb übereinstimmen oder nicht. Im positiven Fall wird das Verfahren fortgeführt, um weitere gesprochene Phrasen des Zugleitbetriebs auf deren Authentizität hin zu überprüfen. Nur im negativen Fall, also beim Feststellen von Unstimmigkeiten aufgrund des Kontexts des Zugleitbetriebs, oder weil kein Muster PTN für den erkannten Text vorhanden ist, wird im Rechenzentrum RZ ein Fehler EOR festgestellt und ausgegeben. Dieser wird an eine Fehleranzeige OUT weitergegeben und kann beispielsweise dem Zugleiter ZL und/oder dem Zugführer ZF auf der Bedieneinrichtung BE oder dem mobilen Endgerät ME angezeigt werden. In jedem Falle wird die Kommunikation als gespeicherte Kommunikation SVE abgelegt und steht daher einer späteren genaueren Überprüfung oder Analyse im Rahmen des Trainingsschritts (Phase A) zur Verfügung.

### Bezugszeichenliste

- ST: Strecke
- GA: Gleisabschnitt
- FZ: Fahrzeug
- ZF: Zugführer
- ZL: Zugleiter
- ME: mobiles Endgerät (z. B. Bedienpanel)
- LZ: Leitzentrale
- BE: Bedieneinrichtung
- SES: Spracherkennungsservice
- SEE: Spracherkennungseinheit
- AE: Analyseeinheit
- SE1 ... SE3: Speichereinheit
- WD: Wetterdienst
- DVE1 ... DVE2: Datenverarbeitungseinheit
- RZ: Rechenzentrum
- CLD: Cloud
- S1 ... S6: Schnittstelle

- ANF: Fahranfrage an den Zugleiter
- ERL: Fahrerlaubnis an den Zugführer
- ANK: Ankunftsmeldung an den Zugleiter

- A: Phase A
- B: Phase B
- C: Phase C
- D: Phase D

- RIL: Richtlinie (z. B. RiL 436)
- ANL: Analyseschritt
- AMD: Akustische Modelle
- SPL: Aussprachedaten
- SMD: Sprachmodelle
- TRN: Trainingsschritt
- PTN: Muster

- REC: Aufzeichnungsschritt
- IDF: Spracherkennungsschritt
- CMP: Vergleichsschritt (mit Mustern)
- WTR: Wetterdaten
- ATL: Streckendaten
- PLS: Plausibilisierungsschritt
- MAT: Prüfung auf Übereinstimmung
- SVE: gespeicherte Kommunikation
- EOR: Fehlerausgaben
- OUT: Fehleranzeige

## Patentansprüche

1. Verfahren zum Überwachen einer gesprochenen Kommunikation im Zugverkehr
**dadurch gekennzeichnet,**
**dass**
• von der gesprochenen Kommunikation eine Aufzeichnung erstellt wird,
• mit der Aufzeichnung rechnergestützt eine Spracherkennung durchgeführt wird,
• mit der Spracherkennung identifizierte Terme rechnergestützt mit gespeicherten Mustern für Terme verglichen werden,
• im Fall von unzulässigen Abweichungen zwischen den identifizierten Termen und den Mustern (PTN) eine Fehlermeldung ausgegeben wird.

2. Verfahren nach Anspruch 1,
**dadurch gekennzeichnet,**
**dass** die Fehlermeldung akustisch oder optisch erfolgt, insbesondere auf ein mobiles Endgerät (ME) eines Fahrzeugs (FZ) und/oder eine Bedieneinrichtung (BE) einer Leitzentrale (LZ).

3. Verfahren nach einem der Ansprüche 1 oder 2,
**dadurch gekennzeichnet,**
**dass** beim Vergleichen der Terme eine Position des Fahrzeugs (FZ) beim Erstellen der Aufzeichnung berücksichtigt wird.

4. Verfahren nach Anspruch 3,
**dadurch gekennzeichnet,**
**dass** die Position mit Streckendaten (ATL) und/oder ortsabhängigen Wetterdaten (WTR) abgeglichen wird.

5. Verfahren nach Anspruch 4,
**dadurch gekennzeichnet,**
**dass** bei dem Abgleichen der Position Terme berücksichtigt werden, die mit den Streckendaten (ATL) und/oder mit den Wetterdaten (WTR) korreliert sind.

6. Verfahren nach Anspruch 5,
**dadurch gekennzeichnet,**
**dass** als Abweichung auch ein Ausbleiben eines mit den Streckendaten (ATL) und/oder mit den Wetterdaten (WTR) korrelierten Terms interpretiert wird.

7. Verfahren nach einem der voranstehenden Ansprüche,
**dadurch gekennzeichnet,**
**dass** die Aufzeichnung nach dem Durchführen der Spracherkennung gespeichert wird.

8. Verfahren nach Anspruch 7,
**dadurch gekennzeichnet,**
**dass** zum Speichern der Aufzeichnung die Blockchain-Technologie genutzt wird.

9. Verfahren zum Erstellen von Mustern (PTN) für eine rechnergestützte Spracherkennung,
**dadurch gekennzeichnet,**
**dass**
• Terme identifiziert werden, die für eine gesprochene Kommunikation im Zugverkehr erforderlich sind,
• mit den Termen rechnergestützt ein Spracherkennungsprogramm trainiert wird, wobei die Terme als Muster (PTN) für die Durchführung einer rechnergestützten Spracherkennung gespeichert werden.

10. Verfahren nach Anspruch 9,
**dadurch gekennzeichnet,**
**dass** ein maschinelles Lernen angewendet wird.

11. Verfahren nach einem der Ansprüche 9 oder 10,
**dadurch gekennzeichnet,**
**dass** als Terme
• vorgegebene Sprachbefehle, insbesondere aus der RiL 436, und/oder
• Bezeichnungen der Züge und Haltestellen
trainiert werden.

12. Verfahren nach einem der Ansprüche 9 bis 11,
**dadurch gekennzeichnet,**
**dass** bei dem Trainieren der Terme auch eine Ortsinformation verarbeitet wird, welche die Position des Fahrzeugs (FZ) während der Nutzung der betreffenden Terme im Schienennetz enthält.

13. Zugleitsystem für eine gesprochene Kommunikation,
**dadurch gekennzeichnet,**
**dass** dieses aufweist:
• mindestens zwei Kommunikationseinheiten, die dazu eingerichtet sind, untereinander eine Verbindung zur Übertragung einer gesprochenen Kommunikation herzustellen,
• eine Spracherkennungseinheit (SEE), die dazu eingerichtet ist, die gesprochene Kommunikation aufzuzeichnen und eine rechnergestützte Spracherkennung zum Identifizieren von Termen durchzuführen,
• eine Analyseeinheit (AE), die dazu eingerichtet ist, rechnergestützt einen Vergleich der Terme mit gespeicherten Mustern (PTN) für diese Terme durchzuführen,
• eine Ausgabeeinheit für identifizierte Fehler.

14. Computerprogrammprodukt mit Programmbefehlen zur Durchführung des Verfahrens nach einem der Ansprüche 1 - 13.

15. Bereitstellungsvorrichtung für das Computerprogrammprodukt nach Anspruch 14, wobei die Bereitstellungsvorrichtung das Computerprogrammprodukt speichert und/oder bereitstellt.
